# EUROPEAN PATENT SPECIFICATION

(11) **EP 0 551 951 B1**
(45) Date of publication and mention of the grant of the patent: **19.07.1995**
(21) Application number: 93200084.7
(22) Date of filing: 13.01.1993
(51) Int. Cl.: B01D 46/24, B01D 46/00, B01D 46/04, B01D 46/46

(54) **An apparatus for filtering solid particles from a fluid**
Vorrichtung zum Filtern von Feststoffpartikeln aus einem Fluid
Dispositif pour la filtration de particules solides d'un fluide

(30) Priority: 16.01.1992 US 821660
(43) Date of publication of application: 21.07.1993
(73) Proprietor: SHELL INTERNATIONALE RESEARCH MAATSCHAPPIJ B.V., 2596 HR Den Haag (NL)
(72) Inventor: Salter, James Arthur, Houston, Texas 77450 (US); Unger, Phillip Edward, Houston, Texas 77043 (US); Appel, Cornelis, NL-2596 HR Den Haag (NL); Nooijen, Johannes Lambertus, NL-3196 KK Rotterdam/Pernis (NL); Dirkse, Hendrik Arien, NL-2596 HR Den Haag (NL)

(56) References cited:
- EP-A- 0 314 253
- US-A- 3 726 066

## Description

The present invention relates to an apparatus for filtering solid particles from a fluid containing solid particles. In many industrial processes, particularly elevated or high temperature, high pressure procedures, fluids are produced containing quantities of solid particles which must be removed before the fluids may be used, treated further, or released. For example, the ordinary combustion of coal produces an effluent gas containing flyash particles which cannot be released to the atmosphere. Similarly, the gasification or partial oxidation of coal often produces a product gas stream which, after bulk removal of solids, contains from 0.1 percent to 4.0 percent by weight, based on the total weight of the gas and solids, of various solid particles which comprise flyslag or flyash and, in some cases, unburned coal. Again, fluid catalytic processes often produce gas or liquid streams containing residual catalyst "fines" which cannot be allowed to contaminate either the product or the environment.

To overcome this difficulty, a variety of treatment procedures may be used. For example, the residual solids-containing fluid may be passed continuously or intermittently through a filter or bank of discrete filter units. Intermittently, the filter(s) are cleaned or purged so that they do not become totally clogged. For example, the filter(s) may be subjected to a back-flush of gas or liquid, the particles removed being allowed to collect in the bottom of the filter vessel for continuous or periodic removal (see EP-A-0 314 253). Sonic, ultrasonic, or subsonic removal may also be employed.

A problem common to many filtration systems is the possibility of failure of the filter element/seal or one or more filter elements/seals in a bank thereof. For example, if one filter element in a bank of filter elements fails, flow of the fluid will channel through the failed filter element, allowing substantial bypass of solids, thereby rendering the whole filter bank ineffective. A need has existed, therefore, for a filter arrangement which may continue operation in the case of a failure of the filter element or one or more filter elements. The invention satisfies this need, overcoming the problem of failure of the filter unit(s) in a novel and efficient manner.

It is an object of the invention to provide a filter apparatus of the type described wherein secondary or backup filter means are provided, suitably positioned "downstream" of the primary filter means, for receiving and allowing passage of the flow of fluid and any solids which may permeate through the primary filter means during normal operation, so that, should failure of the primary filter means occur, the secondary filter means will plug. It is a requirement of the invention that the material of the filter element or elements of the secondary filter means be composed of or comprise material having greater pore size and greater permeability than the material of the element or elements of the primary filter means, so that, during normal operation, any particulates that do pass through the primary filter means will pass through the secondary filter means as well. On the other hand, the permeability and pore size should be low enough to prohibit passage of large amounts of particulates when the first filter fails and insure that the second filter means plugs. To accomplish the results of the invention, the secondary filter means must be positioned so that, should the primary filter means fail and the secondary filter means come into use, normal cleaning of the primary filter(s) does not remove the particles collected on the secondary filter(s). If backflushing of the primary filter element or elements is employed to clean these filter(s), the discharge of the flushing mechanism must not be located so as to clean the secondary filter means as well. As used herein, the term "material" is to be understood, unless indicated to the contrary, to include the singular or plural, i.e., one or more kinds of particle trapping substances. Thus, the "material" of a bank of filters might comprise elements of more than one kind of filtering substance, and a single filter element may comprise more than one kind of filtering substance.

The invention therefore provides an apparatus for filtering solid particles from a fluid containing solid particles comprising:
a vessel;
means for providing a fluid containing solid particles to said vessel, in communication with said vessel;
first filter means, disposed in said vessel to receive said fluid, for filtering solid particles from said fluid, said first filter means comprising first filter material of pore size and permeability to remove said solid particles from said fluid and allow passage of the fluid therethrough, said first filter means disposed in said vessel so that particles in the fluid are removed and collected on the first filter material and fluid from which the particles have been removed passes through said first material;
means for removing solid particles collected on said first filter material;
second filter means for filtering solid particles from said fluid in the event of failure of the first filter means, said second means disposed, in relation to said first filter means, at a locus and in such manner that fluid containing solid particles passes first through said first filter means and then through said second filter means, said second filter means comprising second filter material having a greater pore size and a greater permeability than said first filter material. Advantageously, the second filter means is disposed in said vessel.

More advantageously, the fluid containing solid particles is a gas containing flyash particles. Still more advantageously, the means for removing solid particles collected on said first filter means comprises means for the injection of a backflushing fluid. In an advantageous embodiment of the invention the backflushing fluid is a gas.

The particular type of filter element or elements employed in the invention in the primary filter means is a matter of choice. However, the invention is particularly adapted to high temperature, high pressure use. Thus, the primary filter element or filter elements employed may be composed or constructed of material suitable for pressure or vacuum service which may include high temperature, high pressure service. "High temperature, high pressure service," in the context of the invention, refers to temperatures of perhaps 100 °C to 1500 °C (advantageously 200 °C to 650 °C), and pressures of from one atmosphere to 50 atmospheres or greater. In general, a cylindrically-shaped filter element, or cylindrically shaped filter elements, positioned with a common mount, made of rigid or flexible, felted or non-felted, multiple or single layer material fabric or porous, monolithic (ceramic, metal, or plastic) substances may be used. If a plurality of primary filter elements is employed, the spacing between the filter elements is a function of the particulate concentration of the fluid-particulate mixture.

The secondary filter means may be the same type or may be different from the primary filter means, and the filter material may or may not be of a similar type of material. However, it is a requirement of the invention that the secondary filter material also be suitable for the same service as the primary filter means, and, most importantly, have a greater permeability and greater pore size than the primary filter material utilized. Advantageously, the permeability level and pore size of the secondary material will be greater than that of the primary material by a factor of at least 3, advantageously at least 5. This ensures that, in normal operation, the secondary filter means will allow particles through that are greater in size than the primary filter means and that any particles normally penetrating the primary filter element or elements do not block the secondary filter means. As indicated, however, the pore size and permeability of the filter material of the secondary filter means should not be so great that the secondary filter means does not plug on failure of the primary filter means. Given the disclosure herein, those skilled in the art may select suitable material for the secondary filter means. Advantageously, and not by way of limitation, the pore size and permeability of the material of the secondary filter means should not be greater than than about 20 or 30 times that of the mean particle size of the particles being filtered. Advantageously, the effective surface area of a given secondary filter element should be substantially smaller (say 1 to 10) than the primary filter element or elements related thereto. If backflushing is used to clean the primary filter element(s), although it is not intended that gas from the backflush outlet pass through the secondary filter means, minimal amounts may in fact pass therethrough without significant detriment, and the invention is to be understood as encompassing such amounts. The presence of the secondary filter means may enhance cleaning on backflushing.

While the apparatus of the invention is adapted to a wide variety of service conditions, it is eminently adapted to use in the context wherein a high pressure, elevated or high temperature fluid (liquid or gas) containing solids is processed. Thus, the apparatus may be used, e.g., for solids removal from combustion gases, in an integrated process for the gasification of coal (removal of flyash from synthesis gas), in fluid catalytic processes, in plant emissions control, incineration, and in smelting operations. If solids removal from a liquid is contemplated, the backflushing fluid may be liquid or gaseous, while, in the case of solids removal from a gas, the backflushing fluid will normally be a gas.

The invention will now be described by way of example in more detail by reference to the accompanying drawings, in which: Fig. 1 illustrates a longitudinal section of an embodiment of the invention wherein a plurality of filter elements are employed, each element being provided with a secondary filter means; Fig. 2 illustrates a partial longitudinal section of an advantageous embodiment of the invention wherein a group or cluster of primary filter units is provided with a single secondary filter means; and Fig. 3 illustrates a partial longitudinal section of a different positioning of the filter element in still another advantageous embodiment of the invention. The invention will be illustrated by way of example by description of coal gasification flyash removal, and all values stated are merely exemplary or calculated.

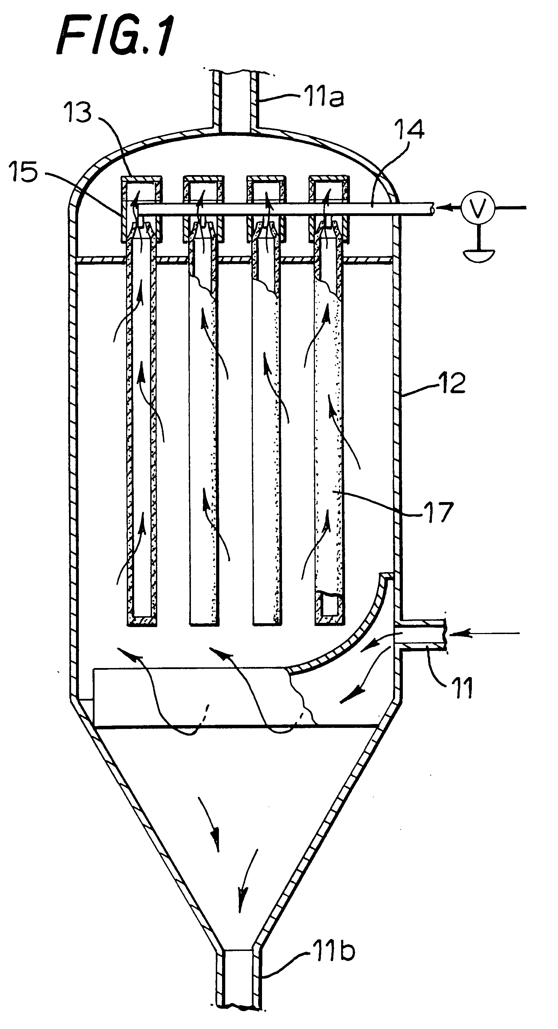

Referring to Fig. 1, a synthesis gas from which the bulk of flyash produced by the gasification of coal has been removed is introduced by means, such as inlet 11, at elevated pressure, e.g., 25 bar, and elevated temperature, e.g., 260 °C, into a vessel or container 12 in a direction tangential to container 12. Alternatively,the mixture may be injected in other ways, such as radially (not shown).

The tangential introduction therein provides gross separation of the particles from the gas, thereby producing a gas to be filtered having a particulate concentration of, for example, 2.2 gram/cm³ and coarse particles which by gravity are falling downwards through outlet 11b. Primary filter means, e.g., ceramic filter elements 17, which are composed, e.g., of layered silicon carbide ceramic formed by bonding or sintering individual particles, are disposed in any suitable manner in vessel 12 so that the particles are removed from the gas and deposited thereon, the gas passing through the filters to further processing via outlet 11a. According to the invention, secondary filter means, element 13, comprising material having a pore size and permeability 5 to 10 times the material of the primary filter means, may be provided with each filter unit, so that, in the event of failure of a given filter unit 17, the second means will filter the gas. By positioning the elements 13 as shown, as described more fully hereinafter, the secondary filter element, in the event of such failure, plugs rapidly thereafter. The operation of the remaining filter elements in vessel 12 may be continued without interruption until, for example, a scheduled shutdown.

According to the invention, if a backflushing gas is used to clean the primary filter elements, the backflushing gas outlet must located so that cleaning of deposits on a plugged second filter means cannot occur. Thus, in the unit illustrated, means 14 are provided, at or near the exit of the primary filters, for periodically backflushing the filters with a suitable gas. For example, a pipe may be provided through vessel 12 to a manifold which provides via a valve V the flushing gas, such as nitrogen, to outlet pipes which empty, as mentioned, at or near the exits of the primary filters. In the illustration shown, secondary filter 13 is positioned so that flushing gas from the outlet of the backflush gas outlet system will be directed principally into the primary filter by placing the secondary filter "behind" the outlet. As will be appreciated by those skilled in the art, the backup filter means 13 may comprise all filter material, or, as shown, may comprise an impermeable collar member 15 and the filter material. In this case, the entry of the manifold into the collar or filter material must be adequately sealed.

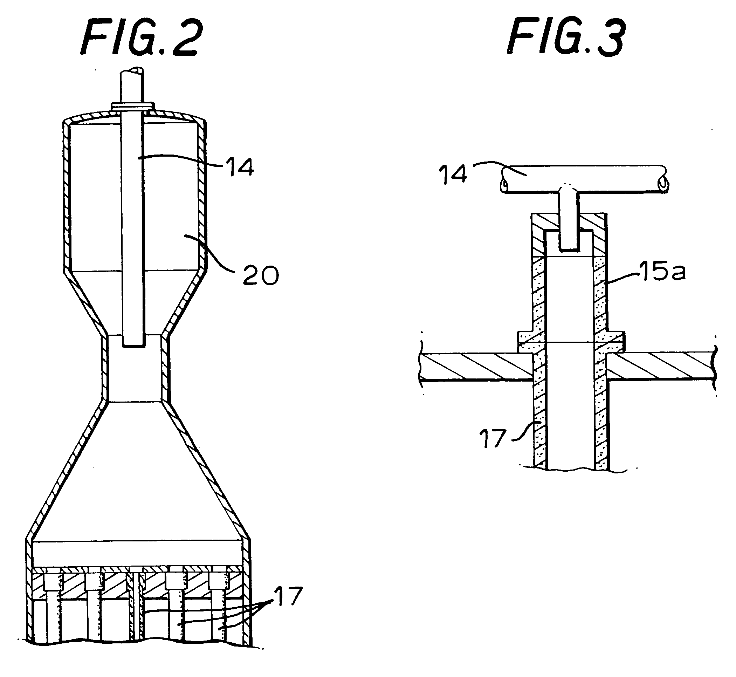

In Fig. 2, a "common" secondary filter unit 20 receives the flow from several primary filter units. This embodiment of the invention has the advantage of simpler construction and reduced cost.

As indicated, Fig. 3 illustrates an embodiment of the invention in which the positioning of the secondary filter element 15a is in "front" and to the side of the backflushing nozzle. Nevertheless, should the primary filter element fail, the backflush would not clear the "plug" of 15a.

In Figs. 2 and 3 reference numerals 14 and 17 represent the same means as applied in Fig. 1.

## Claims

1. An apparatus for filtering solid particles from a fluid containing solid particles comprising:
a vessel (12);
means (11) for providing a fluid containing solid particles to said vessel (12), in communication with said vessel;
first filter means (17), disposed in said vessel (12) to receive said fluid, for filtering solid particles from said fluid, said first filter means (17) comprising first filter material of pore size and permeability to remove said solid particles from said fluid and allow passage of the fluid therethrough, said first filter means (17) disposed in said vessel (12) so that particles in the fluid are removed and collected on the first filter material and fluid from which the particles have been removed passes through said first material; means (14) for removing solid particles collected on said first filter material;
characterized by:
second filter means (13) for filtering solid particles from said fluid in the event of failure of the first filter means, said second means (13) disposed, in relation to said first filter means (17), at a locus and in such manner that fluid containing solid particles passes first through said first filter means (17) and then through said second filter means (13), said second filter means (13) comprising second filter material having a greater pore size and a greater permeability than said first filter material.

2. The apparatus as claimed in claim 1, characterized in that the fluid containing solid particles is a gas containing flyash particles.

3. The apparatus as claimed in claims 1 or 2, characterized in that the second filter means (13) is disposed in said vessel (12).

4. The apparatus as claimed in any one of claims 1-3, characterized in that the means (14) for removing solid particles from said first filter material comprises means for supplying a backflushing fluid.

5. The apparatus as claimed in claim 4, characterized in that the backflushing fluid is a gas.

## Patentansprüche

1. Vorrichtung zum Herausfiltern von Feststoffteilchen aus einem Feststoffteilchen enthaltenden Fluid, umfassend:
einen Behälter (12);
Mittel (11), um dem Behälter (12) ein Feststoffteilchen enthaltendes Fluid zuzuführen, das mit dem Behälter in Verbindung steht;
erste Filtermittel (17), in dem Behälter (12) angeordnet, um das Fluid aufzunehmen, zum Herausfiltern der Feststoffteilchen aus dem Fluid, wobei die ersten Filtermittel (17) ein erstes Filtermaterial einer solchen Porengröße und Durchlässigkeit umfassen, daß die Feststoffteilchen aus dem Fluid entfernt werden und der Durchtritt des Fluids durch dasselbe ermöglicht wird, wobei die ersten Filtermittel (17) in dem Behälter (12) so angeordnet sind, daß Teilchen im Fluid entfernt und auf dem ersten Filtermaterial aufgefangen werden, und Fluid, aus dem die Teilchen abgetrennt worden sind, durch das erste Material tritt;
Mittel (14) zum Entfernen der auf dem ersten Filtermaterial aufgefangenen Feststoffteilchen;
gekennzeichnet durch:
zweite Filtermittel (13) zum Herausfiltern von Feststoffteilchen aus dem Fluid bei Versagen der ersten Filtermittel, wobei die zweiten Mittel (13) in bezug auf die ersten Filtermittel (17) an einem solchen Ort und so angeordnet sind, daß Feststoffteilchen enthaltendes Fluid zuerst durch die ersten Filtermittel (17) und dann durch die zweiten Filtermittel (13) tritt, wobei die zweiten Filtermittel (13) ein zweites Filtermaterial mit größerer Porenweite und größerer Durchlässigkeit als das erste Filtermaterial umfassen.

2. Vorrichtung nach Anspruch 1, dadurch gekennzeichnet, daß es sich bei dem Feststoffteilchen enthaltenden Fluid um ein Flugascheteilchen enthaltendes Gas handelt.

3. Vorrichtung nach Anspruch 1 und 2, dadurch gekennzeichnet, daß die zweiten Filtermittel (13) in dem Behälter (12) angeordnet sind.

4. Vorrichtung nach einem der Ansprüche 1 bis 3, dadurch gekennzeichnet, daß das Mittel (14) zum Entfernen von Feststoffteilchen von dem ersten Filtermaterial Mittel zur Zufuhr eines Rückspülfluids umfaßt.

5. Vorrichtung nach Anspruch 4, dadurch gekennzeichnet, daß es sich bei dem Rückspülfluid um ein Gas handelt.

## Revendications

1. Dispositif pour la filtration de particules solides d'un fluide contenant des particules solides comprenant :
un récipient (12) ;
des moyens (11) pour fournir un fluide contenant des particules solides audit récipient (12) et communiquant avec ledit récipient ;
un premier moyen formant filtre (17) disposé dans ledit récipient (12) pour recevoir ledit fluide afin de filtrer des particules solides dudit fluide, ledit premier moyen formant filtre (17) comprenant une matière du premier filtre dont la taille des pores et la perméabilité sont conçues pour éliminer lesdites particules solides dudit fluide et permettre le passage du fluide à travers ce premier filtre, ledit premier moyen formant filtre (17) étant disposé dans ledit récipient (12) de façon telle que des particules du fluide sont éliminées et collectées sur la matière du premier filtre et le fluide dont on a éliminé les particules traverse ladite matière du premier filtre ;
un moyen (14) servant à éliminer les particules solides collectées sur ladite matière du premier filtre ;
caractérisé par
un second moyen formant filtre (13) servant à filtrer des particules solides dudit fluide en cas de panne du premier moyen formant filtre, ledit second moyen formant filtre (13) étant disposé par rapport audit premier moyen formant filtre (17) à un endroit tel et de façon telle que le fluide contenant des particules solides traverse d'abord ledit premier moyen formant filtre (17), puis ledit second moyen formant filtre (13), ledit second moyen formant filtre (13) comprenant une matière du second filtre dont la taille des pores et la perméabilité sont supérieures à celles de ladite matière du premier filtre.

2. Dispositif selon la revendication 1, caractérisé en ce que le fluide contenant des particules solides est un gaz contenant des particules sous forme de cendres volantes.

3. Dispositif selon les revendications 1 ou 2, caractérisé en ce que le second moyen formant filtre (13) est disposé dans ledit récipient (12).

4. Dispositif selon l'une quelconque des revendications 1 à 3, caractérisé en ce que le moyen (14) servant à éliminer les particules solides de ladite matière du premier filtre comprend un moyen utilisé pour fournir un fluide de rinçage.

5. Dispositif selon la revendication 4, caractérisé en ce que le fluide de rinçage est un gaz.
